# EUROPÄISCHE PATENTSCHRIFT

(11) **EP 2 917 539 B1**
(45) Veröffentlichungstag und Bekanntmachung des Hinweises auf die Patenterteilung: **19.12.2018**
(21) Anmeldenummer: 13753890.6
(22) Anmeldetag: 03.09.2013
(51) Int. Cl.: F02D 9/10, F16K 1/22

(54) **KLAPPENVORRICHTUNG FÜR EINE VERBRENNUNGSKRAFTMASCHINE ODER EIN ELEKTROFAHRZEUG**
FLAP DEVICE FOR AN INTERNAL COMBUSTION ENGINE OR AN ELECTRIC VEHICLE
DISPOSITIF À CLAPET POUR MOTEUR À COMBUSTION INTERNE OU VÉHICULE ÉLECTRIQUE

(30) Priorität: 09.11.2012 DE 102012110763
(43) Veröffentlichungstag der Anmeldung: 16.09.2015
(73) Patentinhaber: Pierburg GmbH, 41460 Neuss (DE)
(72) Erfinder: SCHÄFER, Michael, 16766 Kremmen (DE); NEISE, Ralf, 13086 Berlin (DE); MÜNICH, Marc-Anton, 14476 Potsdam (DE); GLÄßER, Michael, 12355 Berlin (DE); HEINEMANN, Lars, 12107 Berlin (DE)
(74) Vertreter: Patentanwälte ter Smitten Eberlein-Van Hoof Rütten Partnerschaftsgesellschaft mbB
(86) Internationale Anmeldenummer: PCT/EP2013/068158
(87) Internationale Veröffentlichungsnummer: WO 2014/072094

(56) Entgegenhaltungen:
- EP-A2- 0 498 536
- CN-A- 102 182 563
- DE-A1- 4 236 144
- DE-A1-102010 011 728
- US-A- 3 341 170
- US-A- 3 778 028
- US-A- 3 958 595

## Beschreibung

Die Erfindung betrifft eine Klappenvorrichtung für eine Verbrennungskraftmaschine oder ein Elektrofahrzeug mit einem Klappenkörper, einem Kanalgehäuse, in dem der Klappenkörper drehbar angeordnet ist, einem Aktor und einem Wellenstumpf, der vom Aktor durch das Kanalgehäuse zum Klappenkörper ragt und im Kanalgehäuse über ein erstes Lager gelagert ist.
Derartige Klappenvorrichtungen sind insbesondere als Drosselklappen zur Regulierung der Luftzufuhr zum Verbrennungsmotor bekannt. Dabei wird die Klappe im Kanalgehäuse gedreht, wodurch der zur Verfügung stehende Durchströmungsquerschnitt geändert wird. Es sind jedoch auch andere Anwendungen zur Regelung eines Gasstromes, insbesondere eines Luft- oder Abgasstromes bekannt.
Es sind verschiedene Arten der Lagerung und des Aufbaus dieser Klappen offenbart worden. Zumeist weisen diese Klappen, die aus Kunststoff oder aus Metall hergestellt werden können, eine durchgehende Welle auf, welche an beiden Seiten des Klappenkörpers im Kanalgehäuse gelagert wird. Hierzu werden überwiegend Wälzlager und hierbei vor allem Kugellager verwendet. Während das erste Wellenende zumeist in einem Sackloch des Kanalgehäuses gelagert wird, durchdringt das entgegengesetzte Ende das Kanalgehäuse. Auf diesem Wellenende ist üblicherweise ein Zahnrad eines Getriebes angeordnet, über welches eine Verbindung zu einem Elektromotor hergestellt wird, der als Aktor zum Antrieb des Klappenkörpers dient und der mit der Steuereinheit des Verbrennungsmotors verbunden ist.

Ein solcher Drosselklappenstutzen wird beispielsweise in der DE 10 2007 013 937 A1 offenbart. Die mit dem Elektromotor über ein Getriebe verbundene Drehwelle ist im Kanalgehäuse über zwei Nadellager gelagert, welche Dichtringe enthalten.

Des Weiteren ist aus der DE 44 23 370 A1 eine Drosselklappe aus Kunststoff bekannt, welche zwei gegenüberliegende Aufnahmeöffnungen für zwei Wellenstümpfe aufweist, welche formschlüssig in den Öffnungen gehalten werden. Der Klappenkörper enthält Drehlagerstellen, welche von einer Weichkunststoffdichtung umgeben sind. Wie die Lagerung im Stutzen tatsächlich realisiert wird, wird nicht offenbart.

Nachteilig bei den bekannten Ausführungen ist, dass die Montage relativ aufwendig ist und ein hohe Maßgenauigkeit oder zusätzliche Maßnahmen erforderlich sind, um eine exakte Lage des Klappenkörpers bei der Montage im Kanal in Richtung der Drehachse sicherzustellen. Auch besteht eine Anfälligkeit beim Auftreten von korrosiven Kondensaten.

Des Weiteren ist aus der DE 42 36 144 A1 eine Absperrklappe bekannt, deren Klappenkörper auf einer ersten Seite an einem Wellenstumpf befestigt ist, der drehbar im Gehäuse gelagert ist und deren entgegengesetzte Seite auf einem Kugelzapfen gelagert wird.

Aus der US 3,778,028 B ist ein handbetätigtes Schmetterlingsventil bekannt, dessen Klappenkörper sich um einen in einer Bohrung angeordneten Wellenstumpf erstreckt an diesem befestigt ist und dort gelagert ist. Auf der entgegengesetzten Seite erstreckt sich dieser Klappenkörper einen Achsstift umgebend in eine Bohrung, in der die Lagerung angeordnet ist.

Die US 3,958,595 B, die EP 0 498 536 A2 und die US 3,341,170 B offenbaren jeweils ein handbetätigtes Absperrventil, welches über eine durch eine Bohrung des Gehäuses ragende Welle betätigt wird. An der entgegengesetzten Seite ist jeweils ein Achsstift im Gehäuse befestigt, der in eine Öffnung des Klappenkörpers ragt und auf dem der Klappenkörper gedreht wird.

Bei derartigen Klappen ist der Kraftaufwand zur Betätigung so hoch, dass eine elektrische Verstellung dazu führen würde, dass große und kostspielige Motoren eingesetzt werden müssten.

Es stellt sich daher die Aufgabe, eine Klappenvorrichtung bereitzustellen, die einerseits kostengünstig herstellbar und montierbar ist und andererseits einfach exakt im Kanal positionierbar ist, ohne zusätzliche Maßnahmen vornehmen zu müssen. Des Weiteren sollen insbesondere die Lager möglichst gut vor korrosiven Kondensaten geschützt werden.

Diese Aufgabe wird durch eine Klappenvorrichtung mit den Merkmalen des Hauptanspruchs gelöst. Dadurch, dass an der zum Wellenstumpf entgegengesetzten Seite des Klappenkörpers ein Achsstift fest im Kanalgehäuse angeordnet ist, auf dem der Klappenkörper über ein Gleitlager gelagert ist, welches den Achsstift radial umgibt und welches in einer Aufnahmeöffnung des Klappenkörpers angeordnet ist, in welche der Achsstift ragt, wobei der Klappenkörper aus Kunststoff hergestellt ist und eine mit dem Kunststoff teilweise umspritzte Metallplatte aufweist und der Wellenstumpf einen axialen Schlitz aufweist, in den die Metallplatte des Klappenkörpers ragt, wird eine besonders einfache Montage erreicht, da der Achsstift und der Wellenstumpf von axial entgegengesetzten Seiten in das Kanalgehäuse eingeschoben werden können. Der gesamte Aufbau kann so von außen in einfacher Weise zusammengesteckt werden. Zusätzlich wird ein Eindringen von Kondensat im Bereich des Gleitlagers bei geneigten Einbaulagen zuverlässig vermieden. Das Gleitlager kann bei dieser Ausführung nicht nur wie bisher üblich nachträglich eingepresst werden, sondern kann auch umspritzt oder direkt durch den verwendeten Kunststoff dargestellt werden. Zusätzlich wird eine dauerhaltbare Befestigung des Klappenkörpers auf dem Wellenstumpf ermöglicht. Die Kontur der Klappe folgt in dem Bereich der Durchmesserunterschiede der Kontur der Welle um Leckagen zu verhindern.

Zusätzlich ist es vorteilhaft, wenn der Achsstift im Kanalgehäuse eingepresst ist, wodurch an der Seite des Achsstiftes keine weiteren Abdichtungen vorgesehen werden müssen, um eine Dichtheit nach außen sicherzustellen. Durch seine Befestigung im Kanalgehäuse ist Achsstift keiner Wechselbiegung ausgesetzt.

Vorzugsweise ist das erste Lager ein Wälzlager, dessen axiales Ende in den Kanal ragt und gegen eine Anlagefläche des Klappenkörpers anliegt, welche einen Aufnahmering, durch den der Wellenstumpf ragt, axial begrenzt. So kann beim Zusammenstecken des Wellenstumpfes und des Achsstiftes mit der Klappe ein Herunterfallen der Klappe vor dem Einführen des Wellenstumpfes vermieden werden. Gleichzeitig wird eine hohe Dichtigkeit nach außen auch an der Seite des Wellenstumpfes sichergestellt. Das axiale Spiel der Klappe im Kanal kann durch das Einschieben des Wälzlagers angepasst werden, indem das Wälzlager auf Abstand zur Scheibe geschoben wird, wobei unterschiedliche Scheibenstärken verwendet werden können.

Dabei ist es besonders vorteilhaft, wenn das Wälzlager ein Nadellager ist, da dieses eine besonders hohe Tragkraft aufweist und somit bei hoher Beanspruchung eine lange Lebensdauer aufweist.

In einer weiterführenden bevorzugten Ausbildung der Erfindung ist zwischen dem Klappenkörper und dem Kanalgehäuse eine Scheibe angeordnet, welche den Achsstift radial umgibt und die axial gegen eine die Aufnahmeöffnung umgebende Anlagefläche und das Kanalgehäuse anliegt. Durch diese Scheibe wird eine plane Auflagefläche zum Klappenkörper trotz zylindrischer Ausbildung des Kanalgehäuses geschaffen. Gegen diese Scheibe kann der Klappenkörper durch Einschieben des Wälzlagers bei der Montage gedrückt werden. Diese Schreibe dient als Anlaufscheibe in axialer Richtung. Die Anordnung der Scheibe um den Stift des in der Klappe angeordneten Lagers führt auch zu einer Reduktion der Leckage in der geschlossenen Position der Klappe.

Vorteilhafterweise ist ein erster axialer Abschnitt der Scheibe in einer Ausnehmung des Kanalgehäuses angeordnet und ein zweiter axialer Abschnitt ragt in den Kanal. Dies stellt einerseits die Positionierung der Scheibe im Kanal und andererseits die Funktion der Scheibe als plane Auflagefläche sicher.

Zur weiteren Vereinfachung der Montage und zusätzlicher Erhöhung der Dichtheit der Klappe erstreckt sich von den Anlageflächen jeweils ein ringförmiger Vorsprung zum Kanalgehäuse. Entsprechend kann der Klappenkörper vor dem Einbringen der Achse und des Wellenstumpfes über diese Vorsprünge an der Scheibe und dem Wälzlager abgestützt werden.

Entsprechend umgibt der erste ringförmige Vorsprung den in den Kanal ragenden Teil des Wälzlagers und der zweite ringförmige Vorsprung den in den Kanal ragenden Abschnitt der Scheibe. Dies führt auch zu einem erhöhten Widerstand gegen das Eindringen korrosiver Flüssigkeiten in den Lagerbereich.

In einer besonderen Ausführungsform weist der Wellenstumpf einen Absatz auf, der in dem Aufnahmering des Klappenkörpers angeordnet ist, wobei der Abschnitt kleineren Umfangs zum Klappenkörper gerichtet ist, wodurch eine Beschädigung der Dichtungen beim Durchführen des Wellenstumpfes durch das Gehäuse zuverlässig vermieden werden.

Dabei ist vorzugsweise in der Metallplatte ein Loch ausgebildet, in welchem zur Befestigung des Klappenkörpers am ersten Wellenstumpf eine Schraube befestigt ist, die durch den ersten Wellenstrumpf in das Loch der Metallplatte ragt und in ein Gewinde im Wellenstrumpf greift jenseits des Schlitzes.

Eine weitere Vereinfachung der Montage ergibt sich, wenn am zum Aktor weisenden Ende des Wellenstumpfes ein Zahnsegment angespritzt ist, welches im Folgenden mit dem weiteren Getriebe und somit dem Aktor verbunden wird.

Vorzugsweise ist das Gleitlager im Klappenkörper geodätisch unterhalb des Wälzlagers angeordnet, so dass ein Eindringen anfallenden Kondensats in das Gleitlager ausgeschlossen wird.

Des Weiteren ist es vorteilhaft, wenn das Nadellager integrierte Dichtungsringe aufweist, so dass ohne zusätzliche Montageschritte ein Eindringen von Flüssigkeiten in das Nadellager verhindert wird.

Es wird somit eine Klappenvorrichtung geschaffen, bei der eine besonders einfache Montage möglich ist. Auftretende Chargenschwankungen bei der Herstellung des Klappenkörpers können mit einfachen Mitteln ausgeglichen werden. Dabei wird eine genaue Positionierung des Klappenkörpers im Kanalgehäuse erreicht, was zu einer relativ guten Dichtheit des Klappenkörpers im geschlossenen Zustand und zu einem verringerten Ausschuss bei der Montage führt. Außerdem ist die Klappenvorrichtung kostengünstig herstellbar und unempfindlich gegen auftretende korrosive Flüssigkeiten.

Ein Ausführungsbeispiel einer erfindungsgemäßen Klappenvorrichtung ist in den Figuren dargestellt und wird nachfolgend beschrieben.

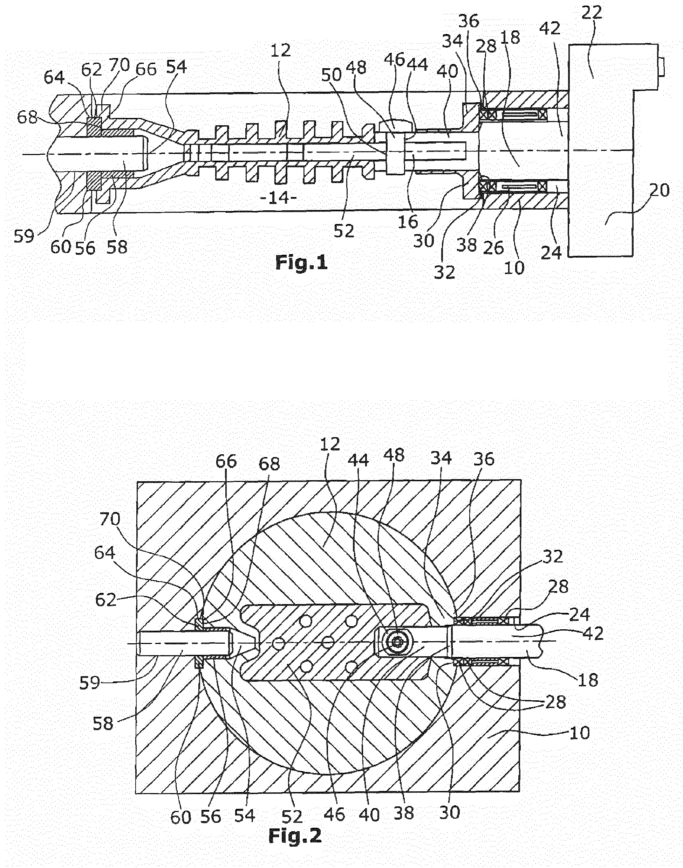

Figur 1 zeigt eine dreidimensionale Darstellung einer erfindungsgemäßen Klappenvorrichtung mit in Höhe der Drehachse aufgeschnittenem Kanalgehäuse und Klappenkörper in Seitenansicht.
Figur 2 zeigt eine Kopfansicht auf die Klappenvorrichtung in vollständig geschnittener Darstellung

Die erfindungsgemäße Klappenvorrichtung besteht aus einem in einem Kanalgehäuse 10 drehbar angeordneten Klappenkörper 12, dessen radiale Ausdehnung im Wesentlichen dem freien Durchmesser eines im Kanalgehäuse 10 ausgebildeten Kanals 14 entspricht. Der Klappenkörper 12 ist in einem Schlitz 16 eines Wellenstumpfes 18 befestigt, auf dessen entgegengesetztem Ende ein nicht dargestelltes Zahnsegment angespritzt ist, welches mit einem weiterführenden in einem Getriebegehäuse 20 angeordneten Getriebe verbunden ist, welches mit einem Elektromotor einen Aktor 22 bildet, der den Klappenkörper 12 antreibt.

Das Kanalgehäuse 10 weist eine Bohrung 24 auf, durch die der Wellenstumpf 18 aus dem Getriebegehäuse 20 in den Kanal 14 ragt. Im dieser Bohrung befindet sich ein als Nadellager 26 ausgebildetes Wälzlager, in dem beidseitig Dichtringe 28 integriert sind.

Das Nadellager 26 ragt mit seinem axialen Ende 30 in den Kanal 14, wo es axial gegen eine Anlagefläche 32 anliegt, die axial den Klappenkörper 12 begrenzt. Diese Anlagefläche 32 bildet die axiale Begrenzung der Klappenkörpers 12. Radial ist dieses axiale Ende 30 des Nadellagers 26 von einem ringförmigen Vorsprung 36 umgeben, der sich von der Anlagefläche 32 des Klappenkörpers 12 in Richtung des Kanalgehäuses 10 erstreckt.

Im Aufnahmering 34 Ist der Wellenstumpf 18 angeordnet, der in diesem Bereich einen Absatz 38 aufweist, so dass ein in das Innere des Kanals 14 weisender den Schlitz 16 aufweisender Abschnitt 40 des Wellenstumpfes 18 einen kleineren Durchmesser aufweist als der in der Bohrung 24 angeordnete Abschnitt 42 des Wellenstumpfes 18.

Im dünneren Abschnitt 40 ist ein Loch 44 ausgebildet, in welchem ein Kopf 46 einer Schraube 48 angeordnet ist, die die Metallplatte 52 über den Wellenschlitz und ein gegenüberliegendes Gewinde klemmt. Diese Metallplatte 52 ist Teil des Klappenkörpers 12 und wird vor dem Spritzen in das Werkzeug zur Bildung des Klappenkörpers 12 eingelegt und anschließend umspritzt. Der geschlitzte Abschnitt 40 des Wellenstumpfes 18 liegt beidseitig gegen diese Metallplatte 52 an und stellt somit die feste Verbindung zwischen dem Klappenkörper 12 und dem Wellenstumpf 18 her.

An der axial zum Aufnahmering 34 entgegengesetzten Seite weist der Klappenkörper 12 eine Aufnahmeöffnung 54 auf, in der ein Gleitlager 56 angeordnet ist. Dieses kann entweder ebenfalls vor dem Spritzen des Klappenkörpers 12 in das Werkzeug eingelegt werden oder durch den Werkstoff selbst gebildet werden, oder nachträglich eingepresst werden. Es umgibt radial einen Achsstift 58, dessen gegenüberliegendes Ende in einer zur ersten Bohrung 24 gegenüberliegenden zweiten Bohrung 59 im Kanalgehäuse 10 befestigt ist.

In Richtung der Drehachse zwischen dem Kanalgehäuse 10 und dem Gleitlager 56 befindet sich eine Scheibe 60, deren erster axialer Abschnitt 62 in einer entsprechend ausgebildeten Ausnehmung 64 in der Wand des Kanalgehäuses 10 liegt und deren zweiter axialer Abschnitt 66 in den Kanal 14 ragt und axial gegen eine Anlagefläche 68 anliegt, welche radial die Aufnahmeöffnung 54 begrenzt. Radial wird der zweite axiale Abschnitt 66 von einem zweiten ringförmigen Vorsprung 70 umgeben, welcher sich von der Anlagefläche 68 aus in Richtung des Kanalgehäuses 10 erstreckt.

Die besonderen Vorteile dieser Klappenvorrichtung ergeben sich bei der Montage, vor allem wenn der Teil des Klappenkörpers 12 mit dem Gleitlager 56 geodätisch unterhalb des über das Nadellager 26 gelagerten Teils angeordnet ist. Nach dem Herstellen des Kanalgehäuses 10 mit den Bohrungen 24, 59 sowie dem Spritzen des Klappenkörpers 12 mit der Metallplatte 52 wird zunächst das Gleitlager 56 in die Aufnahmeöffnung 54 gepresst, wenn es nicht bereits beim Spritzvorgang des Klappenkörpers 12 mit hergestellt wird.

Anschließend wird die Scheibe 60 in die Ausnehmung 64 des Kanalgehäuses 10 gelegt, was aufgrund der geodätischen Lage besonders einfach ist. Der Klappenkörper 12 wird im Kanal 14 so platziert, dass der zweite ringförmige Vorsprung 70 die Scheibe 60 umgibt und die Anlagefläche 68 gegen die Scheibe 60 anliegt. Das Nadellager 26 wird auf Abstand zur Scheibe 60 eingepresst. Dieser Abstand entspricht der Klappenstärke und den temperaturbedingten Mindestspiel. Anschließend wird der Achsstift 58 durch die Bohrung 59 in die Aufnahmeöffnung 54 und durch das Gleitlager 56 gesteckt, wobei durch einen Presssitz des Achsstiftes 58 in der Bohrung 59 eine Abdichtung nach außen geschaffen werden kann. Von der entgegengesetzten Seite wird der Wellenstumpf 18 durch die Bohrung 24 beziehungsweise durch das Nadellager 26 sowie durch den Aufnahmering 34 geschoben und zwar derart, dass die Metallplatte 52 im Schlitz 16 des Wellenstumpfes 18 zu liegen kommt.

Hierzu kann sowohl der Klappenkörper 12 mit der Metallplatte 52 als auch der Wellenstumpf 18 gedreht werden. Im Folgenden wird der Klappenkörper 12 mit der Schraube 48 durch das Loch 44 des Wellenstrumpfes verschraubt und so über den Wellenschlitz geklemmt.
Somit wird mit kostengünstigen Einzelteilen eine Klappenvorrichtung geschaffen, die mit geringem Aufwand zu montieren ist. Die Lage der Klappe kann im Kanal optimiert werden, so dass Chargenschwankungen ausgeglichen werden können. Insbesondere bei geneigter Einbaulage gerät kein Kondensat in das Gleitlager, wodurch sich die Lebensdauer der Lager deutlich erhöht, da das Kondensat aufgrund der Gravitation aus beiden Lagern hinausläuft.
Es sollte deutlich sein, dass der Schutzbereich des Hauptanspruchs nicht auf das beschriebene Ausführungsbeispiel beschränkt ist, sondern verschiedene konstruktive Modifikationen denkbar sind. Insbesondere können Verbindungen sowohl lösbar als auch nicht lösbar ausgeführt werden.

## Patentansprüche

1. Klappenvorrichtung für eine Verbrennungskraftmaschine oder ein Elektrofahrzeug mit
einem Klappenkörper (12),
einem Kanalgehäuse (10), in dem der Klappenkörper (12) drehbar angeordnet ist,
einem Aktor (22) und
einem wellenstumpf (18), der vom Aktor (22) durch das Kanalgehäuse (10) zum Klappenkörper (12) ragt und im Kanalgehäuse (10) über ein erstes Lager (26) gelagert ist,
**dadurch gekennzeichnet, dass**
an der zum Wellenstumpf (18) entgegengesetzten Seite des Klappenkörpers (12) ein Achsstift (58) fest im Kanalgehäuse (10) angeordnet ist, auf dem der Klappenkörper (12) über ein Gleitlager (56) gelagert ist, welches den Achsstift (58) radial umgibt und welches in einer Aufnahmeöffnung (54) des Klappenkörpers (12) angeordnet ist, in welche der Achsstift (58) ragt, wobei der Klappenkörper (12) aus Kunststoff hergestellt ist und eine mit dem Kunststoff teilweise umspritzte Metallplatte (52) aufweist und der Wellenstumpf (18) einen axialen Schlitz (16) aufweist, in den die Metallplatte (52) des Klappenkörpers (12) ragt.

2. Klappenvorrichtung für eine Verbrennungskraftmaschine oder Elektrofahrzeuge nach Anspruch 1,
**dadurch gekennzeichnet, dass**
der Achsstift (58) im Kanalgehäuse (10) eingepresst ist.

3. Klappenvorrichtung für eine Verbrennungskraftmaschine oder Elektrofahrzeuge nach einem der Ansprüche 1 oder 2,
**dadurch gekennzeichnet, dass**
das erste Lager (26) ein Wälzlager ist, dessen axiales Ende (30) in den Kanal (14) ragt und gegen eine Anlagefläche (32) des Klappenkörpers (12) anliegt, welche einen Aufnahmering (34), durch den der Wellenstumpf (18) ragt, axial begrenzt.

4. Klappenvorrichtung für eine Verbrennungskraftmaschine oder Elektrofahrzeuge nach Anspruch 3,
**dadurch gekennzeichnet, dass**
das Wälzlager (26) ein Nadellager ist.

5. Klappenvorrichtung für eine Verbrennungskraftmaschine oder Elektrofahrzeuge nach einem der vorhergehenden Ansprüche,
**dadurch gekennzeichnet, dass**
zwischen dem Klappenkörper (12) und dem Kanalgehäuse (10) eine Scheibe (60) angeordnet ist, welche den Achsstift (58) teilweise radial umgibt und die axial gegen eine die Aufnahmeöffnung (54) umgebende Anlagefläche (68) und das Kanalgehäuse (10) anliegt.

6. Klappenvorrichtung für eine Verbrennungskraftmaschine oder Elektrofahrzeuge nach Anspruch 5,
**dadurch gekennzeichnet, dass**
ein erster axialer Abschnitt (62) der Scheibe (60) in einer Ausnehmung (64) des Kanalgehäuses (10) angeordnet ist und eine zweiter axialer Abschnitt (66) in den Kanal (14) ragt.

7. Klappenvorrichtung für eine Verbrennungskraftmaschine oder Elektrofahrzeuge nach einem der Ansprüche 3 und 5 oder 6,
**dadurch gekennzeichnet, dass**
sich von den Anlageflächen (32, 68) jeweils ein ringförmiger Vorsprung (36, 70) axial zum Kanalgehäuse (10) erstreckt.

8. Klappenvorrichtung für eine Verbrennungskraftmaschine oder Elektrofahrzeuge nach Anspruch 7,
**dadurch gekennzeichnet, dass**
der erste ringförmige Vorsprung (36) den in den Kanal (14) ragenden Teil des ersten Lagers (26) umgibt.

9. Klappenvorrichtung für eine Verbrennungskraftmaschine oder Elektrofahrzeuge nach Anspruch 7 oder 8,
**dadurch gekennzeichnet, dass**
der zweite ringförmige Vorsprung (70) den in den Kanal (14) ragenden Abschnitt (66) der Scheibe (60) umgibt.

10. Klappenvorrichtung für eine Verbrennungskraftmaschine oder Elektrofahrzeuge nach einem der Ansprüche 7 bis 9,
**dadurch gekennzeichnet, dass**
der Wellenstumpf (18) einen Absatz (38) aufweist, der in dem Aufnahmering (34) des Klappenkörpers (12) angeordnet ist, wobei der Abschnitt (40) kleineren Umfangs zum Klappenkörper (12) gerichtet ist.

11. Klappenvorrichtung für eine Verbrennungskraftmaschine oder Elektrofahrzeuge nach einem der vorhergehenden Ansprüche,
**dadurch gekennzeichnet, dass**
in der Metallplatte (52) ein Loch (50) ausgebildet ist, in welchem zur Befestigung des Klappenkörpers (12) am ersten Wellenstumpf (18) eine Schraube (48) befestigt ist, die durch den ersten Wellenstumpf (18) und das Loch (50) in der Metallplatte (52) in ein Gewinde Im Wellenstrumpf (18) jenseits des Schlitzes (16) greift.

12. Klappenvorrichtung für eine Verbrennungskraftmaschine oder Elektrofahrzeuge nach einem der vorhergehenden Ansprüche,
**dadurch gekennzeichnet, dass**
am zum Aktor (22) weisenden Ende des Wellenstumpfes (18) ein Zahnsegment angespritzt ist.

13. Klappenvorrichtung für eine Verbrennungskraftmaschine oder Elektrofahrzeuge nach einem der vorhergehenden Ansprüche,
**dadurch gekennzeichnet, dass**
das Gleitlager (56) im Klappenkörper (12) geodätisch unterhalb des ersten Lagers (26) angeordnet ist.

14. Klappenvorrichtung für eine Verbrennungskraftmaschine oder Elektrofahrzeuge nach einem der Ansprüche 4 bis 13,
**dadurch gekennzeichnet, dass**
das Nadellager (26) integrierte Dichtungsringe (28) aufweist.

## Claims

1. A flap device for an internal combustion engine or an electric vehicle, the flap device comprising:
a flap body (12),
a duct housing (10) in which the flap body (12) is rotatably arranged;
an actuator (22), and
a stub shaft (18) arranged to project from the actuator (22) through the duct housing (10) to the flap body (12) and supported in the duct housing (10) via the first bearing (26),
**characterized in that**
an axial pin (58) is arranged so as to be fixed in the duct housing (10) on a side of the flap body (12) opposite to the stub shaft (18), on which pin the flap body (12) is supported via a slide bearing (56) which radially surrounds the axial pin (58) and which is arranged in a receiving opening (54) of the flap body (12) into which the axle pin (58) projects, wherein the flap body (12) is made of plastic material and comprises a metal plate partly overmolded with plastic material, and the stub shaft (18) has an axial slit (16) into which the metal plate (52) of the flap body (12) projects.

2. The flap device for an internal combustion engine or an electric vehicle as recited in claim 1, **characterized in that** the axial pin (58) is press-fitted in the duct housing (10).

3. The flap device for an internal combustion engine or an electric vehicle as recited in one of claims 1 or 2, **characterized in that** the first bearing (26) is a rolling bearing, the axial end (30) of which is arranged to extend into the duct (14) and to abut on an abutment face (32) of the flap body (12), which axially delimits a receiving ring (34) through which the stub shaft (18) projects.

4. The flap device for an internal combustion engine or an electric vehicle as recited in claim 3, **characterized in that** the rolling bearing (36) is a needle bearing.

5. The flap device for an internal combustion engine or an electric vehicle as recited in one of the preceding claims, **characterized in that** a disk (60) is arranged between the flap body (12) and the duct housing (10), the disk being configured to partially radially surround the axial pin (58) and to axially abut against an abutment face (68) surrounding the receiving opening (54) and against the duct housing (10).

6. The flap device for an internal combustion engine or an electric vehicle as recited in claim 3, **characterized in that** a first axial section (62) of the disc (60) is arranged in a recess (64) in the duct housing (10) and a second axial section (66) is configured to extend into the duct (14).

7. The flap device for an internal combustion engine or an electric vehicle as recited in one of claims 3 and 5 or 6, **characterized in that** a respective annular projection (36, 70) extends from the abutment faces (32, 68) axially to the duct housing (10).

8. The flap device for an internal combustion engine or an electric vehicle as recited in claim 7, **characterized in that** the first annular projection (36) surrounds the section of the first bearing (26) which extends into the duct (14).

9. The flap device for an internal combustion engine or an electric vehicle as recited in claim 7 or 8, **characterized in that** the second annular projection (70) surrounds the section (66) of the disk (60) which extends into the duct (14).

10. The flap device for an internal combustion engine or an electric vehicle as recited in one of claims 7 to 9, **characterized in that** the stub shaft (18) comprises a step (38) arranged in the receiving ring (34) of the flap body (12), the section (40) of smaller circumference being arranged to face the flap body (12).

11. The flap device for an internal combustion engine or an electric vehicle as recited in one of the preceding claims, **characterized in that** a hole (50) is formed in the metal plate (52), in which hole a screw (48) is fastened for mounting the flap body (12) to the first stub shaft (18), the screw passing through the first stub shaft (18) and through the hole (50) in the metal plate (52) so as to engage a thread in the stub shaft (18) beyond the axial slot (16).

12. The flap device for an internal combustion engine or an electric vehicle as recited in one of the preceding claims, **characterized in that** a tooth segment is molded to the end of the stub shaft (18) facing the actuator (22).

13. The flap device for an internal combustion engine or an electric vehicle as recited in one of the preceding claims, **characterized in that** the slide bearing (56) is formed in the flap body (12) geodetically below the first bearing (26).

14. The flap device for an internal combustion engine or an electric vehicle as recited in one of claims 4 to 13, **characterized in that** the needle bearing (26) comprises integrated sealing rings (28).

## Revendications

1. Dispositif à clapet pour moteur à combustion interne ou véhicule électrique avec
un corps de clapet (12),
un boitier de canal (10), dans lequel ledit corps de clapet (12) est disposé de manière rotative,
un actionneur (22), et
un bout d'arbre (18) saillant de l'actionneur (22) à travers le boitier de canal (10) jusqu'au corps de clapet (12) et supporté dans le boitier de canal (10) par un premier palier (26),
**caractérisé en ce qu'**une broche de l'axe (58) est disposée de manière fixe dans le boitier de canal (10) sur le côté du corps de clapet (12) opposé au bout d'arbre (18), sur laquelle broche ledit corps de clapet (12) est supporté par un palier lisse (56) radialement entourant ladite broche de l'axe (58) et disposé dans une ouverture de réception (54) dudit corps de clapet (12), dans laquelle ladite broche de l'axe (58) saille, ledit corps de clapet (12) étant fabriqué à partir de matière plastique et comprenant une plaque métallique (52) partiellement surmoulée avec de la matière plastique, et ledit bout d'arbre (18) présente une fente axiale (16) dans laquelle la plaque métallique (52) du corps de clapet (12) saille.

2. Dispositif à clapet pour moteur à combustion interne ou véhicule électrique selon la revendication 1, **caractérisé en ce que** ladite broche de l'axe (58) est disposée dans le boitier de canal (10).

3. Dispositif à clapet pour moteur à combustion interne ou véhicule électrique selon la revendication 1 ou 2, **caractérisé en ce que** le premier palier (26) est un roulement à rouleaux dont l'extrémité axiale (30) s'étend dans le canal (14) et s'applique contre une surface de contact (32) du corps de clapet (12), qui axialement délimite une bague de réception (34) à travers laquelle le bout d'arbre (18) s'étend.

4. Dispositif à clapet pour moteur à combustion interne ou véhicule électrique selon la revendication 3, **caractérisé en ce que** le roulement à rouleaux (26) est un roulement à aiguilles.

5. Dispositif à clapet pour moteur à combustion interne ou véhicule électrique selon l'une quelconque des revendications précédentes, **caractérisé en ce qu'**une disque (60) est disposée entre le corps de clapet (12) et le boitier de canal (10), qui partiellement entoure la broche de l'axe (58) et qui s'applique axialement contre une surface de contact (68), qui entoure l'ouverture de réception (54), et contre le boitier de canal (10).

6. Dispositif à clapet pour moteur à combustion interne ou véhicule électrique selon la revendication 5, **caractérisé en ce qu'**une première section (62) axiale de la disque (60) est disposée dans un évidement (64) du boitier de canal (10) et une deuxième section axiale (66) s'étend dans le canal (14).

7. Dispositif à clapet pour moteur à combustion interne ou véhicule électrique selon l'une quelconque des revendications 3 et 5 ou 6, **caractérisé en ce qu'**une saillie annulaire (36, 70) respective s'étend axialement à partir des surfaces de contact (32, 68) vers le boitier de canal (10).

8. Dispositif à clapet pour moteur à combustion interne ou véhicule électrique selon la revendication 7, **caractérisé en ce que** la première saillie annulaire (36) entoure la partie du premier palier (26) s'étendant dans le canal (14).

9. Dispositif à clapet pour moteur à combustion interne ou véhicule électrique selon la revendication 7 ou 8, **caractérisé en ce que** la deuxième saillie annulaire (70) entoure la section (66) de la disque (60) s'étendant dans le canal (14).

10. Dispositif à clapet pour moteur à combustion interne ou véhicule électrique selon l'une quelconque des revendications 7 à 9, **caractérisé en ce que** le bout d'arbre (18) comprend un épaulement (38) disposé dans la bague de réception (34) du corps de clapet (12), la section à diamètre inférieure étant dirigée vers le corps de clapet (12).

11. Dispositif à clapet pour moteur à combustion interne ou véhicule électrique selon l'une quelconque des revendications précédentes, **caractérisé en ce qu'**un trou (50) est formé dans la plaque métallique (52), dans lequel une vis (48) est fixée pour la fixation de corps de clapet (12) au premier bout d'arbre (18), la vis s'engageant, à travers le premier bout d'arbre (18) et le trou (50), dans un filet dans le bout d'arbre (18) au-delà de la fente (16).

12. Dispositif à clapet pour moteur à combustion interne ou véhicule électrique selon l'une quelconque des revendications précédentes, **caractérisé en ce qu'**un segment de dent est moulé par injection à l'extrémité du bout d'arbre (18) dirigée vers l'actionneur (22).

13. Dispositif à clapet pour moteur à combustion interne ou véhicule électrique selon l'une quelconque des revendications précédentes, **caractérisé en ce que** le palier lisse (56) est disposé dans le corps de clapet (12) géodésiquement sous le premier palier (26).

14. Dispositif à clapet pour moteur à combustion interne ou véhicule électrique selon l'une quelconque des revendications 4 à 13, **caractérisé en ce que** le roulement à aiguilles (26) comprend des bagues d'étanchéité (28) intégrées.
